**Europäisches Patentamt**

**European Patent Office**

**Office européen des brevets**

(11) Veröffentlichungsnummer : **0 396 031 B1**

(12) **EUROPÄISCHE PATENTSCHRIFT**

(45) Veröffentlichungstag der Patentschrift :
**11.08.93 Patentblatt 93/32**

(21) Anmeldenummer : **90108019.2**

(22) Anmeldetag : **27.04.90**

(51) Int. Cl.⁵ : **A47K 11/02**

(54) **Klosett mit einem Spender für Fäkalienbeutel sowie Steuerung und Fäkalienbeutel hierfür.**

(30) Priorität : **03.05.89 CH 1678/89**

(43) Veröffentlichungstag der Anmeldung :
**07.11.90 Patentblatt 90/45**

(45) Bekanntmachung des Hinweises auf die
Patenterteilung :
**11.08.93 Patentblatt 93/32**

(84) Benannte Vertragsstaaten :
**BE DE ES FR GB IT NL SE**

(56) Entgegenhaltungen :
**EP-A- 0 303 323**
**DE-A- 2 021 142**
**DE-A- 2 105 075**

(56) Entgegenhaltungen :
**DE-A- 2 310 164**
**DE-A- 2 902 476**
**DE-A- 3 026 763**
**DE-A- 3 433 969**
**US-A- 3 772 712**

(73) Patentinhaber : **Technolizenz Establishment**
**Letzanaweg 25**
**FL-9490 Triesen (LI)**

(72) Erfinder : **Stender, Elisabeth**
**El Pedral A 302**
**Encamp (AD)**

(74) Vertreter : **Büchel, Kurt F., Dr.**
**Patentbüro Dr. Büchel Letzanaweg 25**
**FL-9495 Triesen (LI)**

Jouve, 18, rue Saint-Denis, 75001 PARIS

EP 0 396 031 B1

## Beschreibung

Die Erfindung bezieht sich auf ein Klosett nach dem Oberbegriff des Anspruches 1, sowie auf eine Steuerung und Fäkalienbeutel hiefür.

Ein Klosett, welches auch ohne Spülwasser und ohne Chemikalien auskommen kann, ist in seinen Grundzügen in der DE-A-34 33 969 beschrieben. Dort werden die (entweder nach Art von Klosettpapier ineinander gefalteten oder nacheinander aufgerollten und zusammenhängenden) Beutel mit Hilfe von Greifern dem Spender entnommen und - der Beschreibung nach - in nicht näher gezeigter Weise mit Hilfe von Unterdruck an der den Sitzrand bildenden Klosettbrille befestigt. Anschliessend sollen die Beutel mit Hilfe der Greifer verschlossen und dann entsorgt werden. In der Praxis ergeben sich damit aber Probleme, weil die durchnässten Beutel kaum mehr dem auf sie einwirkenden Zuge beim Verschliessen durch die Greifer zu widerstehen vermögen. Auch ist der konstruktive Aufwand sowie der Platzbedarf für die Greifer relativ hoch, welch letzterer Nachteil sich gerade bei den Hauptanwendungen solcher Klosetts, nämlich in Land-, Luft- und Wasserfahrzeugen, ungünstig auswirkt, weil dort ja der vorhandene Platz relativ begrenzt ist.

Wie die Anordnung der Beutel nach dem Stande der Technik innerhalb des Spenders sein kann, mag etwa der DE-A-20 21 142 entnommen werden. Bei dieser bekannnten Anordnung wird aber überhaupt auf ein automatisiertes Entnahmesystem für die Beutel verzichtet (jedenfalls ist keines dargestellt) bzw. wäre es zum Abziehen der Rolle relativ kompliziert und störungsanfällig, da voraussichtlich nur Zugkräfte dazu angewandt werden können.

In der DE-A-23 10 164 ist ein Klosettsitz beschrieben, dessen Rand bei jedem Gebrauch durch eine Schutzabdeckung geschützt werden soll. Hiezu ist der Deckel als Spender für die flachen, etwa ringförmigen Schutzabdeckungen ausgebildet und mit dem an eine Saugleitung abgeschlossenen Klosettsitz, in Form einer Klosettbrille, durch Auf- und Zuklappen jeweils in verschiedene Relativlagen bringbar, wobei in einer zueinander parallelen Lage von Deckel und Brille die jeweils unterste Schutzabdeckung von der Brille angesaugt wird, so dass sie diese überdeckt. Dieses System eignet sich zwar für die Aufnahme flacher Schutzringe gut, doch vermag es keine Anleitung dafür zu geben, wie eine einwandfreie Abnahme und Entfaltung - fertig zum Gebrauch - eines Fäkalienbeutels erfolgen kann. Denn die Verhältnisse sind bei einem Fäkalienbeutel ja insoferne komplizierter, als dieser nicht nur über den Sitzrand reichen muss, sondern auch einwandfrei entfaltet werden soll, um dem Benützer nicht mühsame und unangenehme Hantierungen aufzuerlegen.

Der Erfindung liegt die Aufgabe zugrunde, ein Klosett der eingangs genannten Art platzsparend, hygienisch und betriebssicher, und dies mit einfachen Mitteln, auszubilden. Diese Aufgabe wird durch die kennzeichnenden Merkmale des Anspruches 1 gelöst. Vorteilhafte Weiterbildungen der Erfindung sind in den Kennzeichen der Unteransprüche beschrieben.

Dadurch, dass die Fäkalienbeutel im Spender flach übereinander liegen, also nicht etwa ineinandergefaltet sind, sind sie leicht voneinander zu trennen bzw. einzeln zu erfassen. Durch die Beweglichkeit von Sitzrand und/oder Spender in die zueinander parallele Relativlage ist eine konstruktiv und platzmässig aufwendige Entnahmeeinrichtung vermieden, wobei die zueinander parallele Relativlage zusammen mit dem Ansaugen der Beutel eine einwandfreie Entnahme aus dem Spender sichert

Zwar wurde in der DE-A-20 21 142 bereits vorgeschlagen, die Beutel mit Vorratsfalten zu versehen, die sich dann im Gebrauch (zur Bildung der Beutelhöhlung) auseinanderfalten. Das Auseinanderfalten soll sich aber nach der Beschreibung unter dem Gewichte des hineinfallenden Inhaltes vollziehen. Dies wird im allgemeinen unhygienisch und unangenehm für den Benutzer sein. Zur Vermeidung eines solchen Nachteiles wird die Massnahme des letzten Merkmales des Anspruches 1 vorgeschlagen, wobei die Unterdruckleitung - angesichts der für das Ansaugen der Beutel ohnedies erforderlichen Unterdruckquellenur mehr einen geringen konstruktiven Aufwand bedeutet und damit einwandfreies Entfalten jedes Beutels durch Saugwirkung von unten her sichert.

Auch die Massnahme, eine Unterdruckleitung in die Klosettschüssel münden zu lassen, ist für sich aus der US-A-3 772 712 bekannt. Dort steht allerdings diese Unterdruckleitung über die Klosettschüssel auch in leitender Verbindung mit den Sauglöchern des über die Klosettschüssel nach innen ragenden Sitzrandes, dessen Sauglöcher in den Schüsselinnenraum münden. Dies hat aber zunächst den Nachteil, dass der Sitzrand relativ dünn und unstabil ausgebildet sein muss. Ist er gar aus Holz, so kann sich durch das Arbeiten des Materiales eine Verschiebung der Löcher dieses Materials gegenüber der Unterlage ergeben, wodurch die Saugwirkung in Frage gestellt wird. Vor allem aber hat der Unterdruck einerseits die Aufgabe, den Beutel entfaltet zu halten, andererseits seine Ränder zu fixieren. Hier wird es schwierig sein, das rechte Verhältnis zu finden, denn wirkt der Saugdruck - etwa auf Grund einer Falte des Beutels - auf den Rand zu wenig ein, so besteht die Gefahr, dass der Beutel ohne weiteres in die Klosettschüssel gesaugt wird, ohne benutzt zu werden. Ist der Saugdruck am Sitzrand jedoch zu hoch, so wird es schwierig sein, den Beutel vom Sitzrand wieder zu lösen, zumal die besondere Konstruktion dieses bekannten Klosetts es wegen der Duftabsaugung verlangt, das

2

Gebläse praktisch ständig in Betrieb zu halten.

Demgegenüber beinhaltet die Erfindung erstmals die Idee, zwei unterschiedliche Unterdruckanschlüsse zu verwenden, nämlich die genannte Saugleitung und die Unterdruckleitung, die nun leicht so dimensioniert (oder durch Zwischenschalten von Justierventilen so eingestellt) werden können, dass an jedem Orte der für die jeweilige Funktion optimale Druck herrscht. Wie später noch ersichtlich wird, erlaubt diese Zweiteilung darüberhinaus auch eine wirksame Steuerung, bei der die genannten Anschlüsse jeweils gesondert betätigt werden.

Massnahmen, die auch unabhängig von der Art der Beutelentnahme von erfinderischer Bedeutung sind, sind in den Ansprüchen 7 bis 10 beschrieben. Zwar ist das Kühlen der Fäkalien bereits in der DE-A-21 05 075 beschrieben, doch ist diese bekannte Konstruktion für die Praxis kaum geeignet.

Der Grund ist einfach der, dass eine Abkühlung der Wandung der Klosettschüssel auf -15°C praktisch notwendigerweise zu einem unangenehmen Gefühl, wenn nicht sogar zu einer gesundheitlichen Gefahr, für den Benutzer werden muss. Selbst wenn man in Betracht zieht, dass eine gleichzeitige Beheizung der Aussenflächen vorgeschlagen wird, kann mit einem derartig aufwendigen System (gleichzeitiges Heizen und Kühlen) kaum das erstrebte Ziel erreicht werden. Wenn die Erwärmung tatsächlich den Kühleffekt kompensieren soll, dann wird der Zweck der Kühlung, nämlich weitgehende Geruchsfreiheit, zunichte gemacht. Ganz abgesehen davon ist das Einsetzen relativ steifer Fäkalienbeutel von oben in die Klosettschüssel sowie die Entnahme von Hand aus durch Herausheben umständlich, unhygienisch und unzuverlässig.

Man hat, wohl auf Grund der schlechten Erfahrung mit obiger Konstruktion, die Zweckmässigkeit und Nützlichkeit einer Kühlbehandlung nicht erkannt, die sich für gewisse Anwendungen ergibt, wie z.B. Kühlschiffe oder andere Kühlfahrzeuge, und vor allem für Flugzeuge, die ja in grossen Höhen mit einer Lufttemperatur von etwa -50°C fliegen. Die DE-A-29 02 476 beschreibt anhand eines Nassklosetts sogar Massnahmen, um ein Gefrieren zu verhindern.

Dadurch, dass ein von der Klosettschüssel getrennter Kühlraum vorgesehen ist, wird die Gefahr einer Unterkühlung des Benutzers sowie eine unhygienische Handhabung der Beutel vermieden.

Zur Steuerung einer Klosettanlage ist aus der DE-A-30 26 763 bereits ein verhältnismässig aufwendiges, umständliches und teures System für ein Nassklosett bekannt geworden. Demgegenüber zeichnet sich die erfindungsgemässe Steuerung durch ihre Einfachheit aus.

Die Erfindung wird im folgenden anhand von Ausführungsbeispielen näher erläutert, aus denen sich weitere wichtige Merkmale ergeben. Es zeigt:

Fig. 1   einen teilweise schematischen Vertikalschnitt durch ein Klosett mit Beutelspender, wobei ein einer Klosettbrille entsprechender Sitzrand in hochgeschwenkter Lage zur Entnahme eines Beutels am Spender anliegt;

Fig. 2   eine Ansicht ähnlich Fig.1, wobei über den Sitzrand ein Beutel entnommen ist und der Sitzrand und der Beutel sich in ihrer horizontalen Gebrauchslage befinden;

Fig. 3   eine Draufsicht auf den Sitzrand;

Fig. 4   eine Draufsicht auf den Sitzrand mit Fäkalienbeutel;

Fig. 5   einen schematischen Vertikalschnitt durch eine Klosettschüssel mit angeschlossenem Sammelbehälter für die Fäkalienbeutel und Kühleinrichtung;

Fig. 6   eine schematische Darstellung des entfalteten Fäkalienbeutels;

Fig. 7   eine schematische Darstellung eines Klosetts mit schwenkbarem Spender; und

Fig. 8   einen Querschnitt durch den Sitzrand mit einer besonderen Ausführungsart der Sauglöcher.

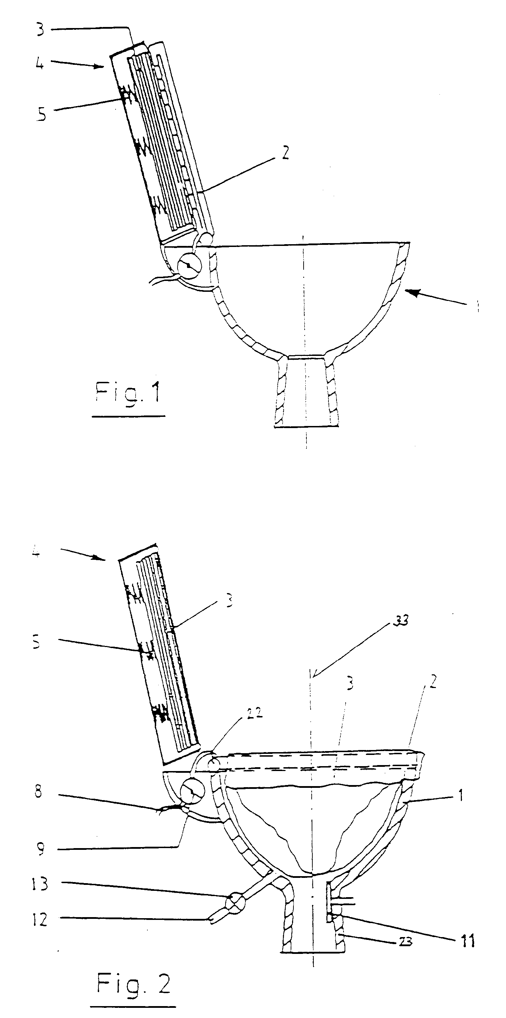

Die Fig.1 und 2 zeigen eine übliche Klosettschüssel 1 mit einem an ihr schwenkbaren Sitzrand 2, der an einer Klosettbrille ausgebildet ist. In Fig.1 ist der Sitzrand 2 hochgeschwenkt und liegt an dem vordersten der Fäkalienbeutel 3 an, von denen ein Stapel in einem Spender 4 gehalten ist. Der Stapel wird über Federn 5 nach vorne gedrückt. Die Fäkalienbeutel werden, wie in Fig.7 dargestellt, nur an ihrem äussersten Rand durch den Rand der Spenderöffnung 32 zurückgehalten.

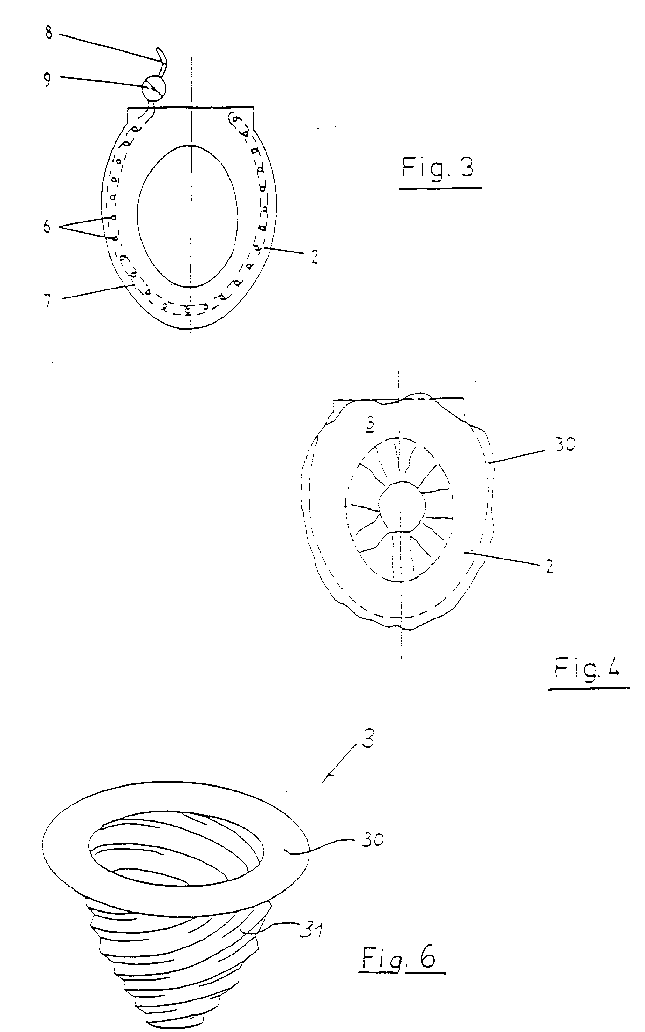

Fig.3 lässt erkennen, dass im Sitzrand 2 Saugöffnungen 6 vorgesehen sind, die über einen Saugkanal 7 mit einer ersten Saugleitung 8 in Verbindung stehen. Ausserdem ist in der Saugleitung ein Unterdruckventil 9 vorgesehen. Öffnet das Ventil, so wird der Fäkalienbeutel 3 mittels des Unterdrucks und über die Sauglöcher 6 am Sitzrand 2 gehalten. Diese Sauglöcher 6, die einerseits zur Bereitstellung der Fäkalienbeutel 3 aus dem Spender 4, andererseits aber auch zum haftenden Fixieren der Fäkalienbeutel 3 während des Gebrauchs dienen, können infolgedessen auch als Vielzahl kleiner Sauglöcher 6 ausgebildet sein, die, über die Oberfläche des Sitzrandes 2 verteilt, in einen gemeinsamen Saugkanal 7 münden (Fig.8).

Fig.2 zeigt den Sitzrand 2 in waagrechter Gebrauchslage auf der Klosettschüssel 1. Er hat den vordersten der Fäkalienbeutel 3 mit sich genommen, der aufgefaltet und in die Schüssel hineinragend eingezeichnet ist. Für die Verschwenkung des Sitzrandes 2 um die Achse 22 dient ein Motor 10 (Fig.7), der beispielsweise über den Unterdruck betätigt wird oder als Elektromotor ausgebildet ist.

Fig.2 lässt erkennen, dass der Abgangstutzen 23 der Klosettschüssel 1 von einem schwenkbaren Verschluss 11 verschlossen werden kann. In die Klosettschüssel 1 mündet eine weitere Unterdruckleitung 12 über ein Ventil 13. Zweck dieser Leitung ist es, den Fäkalienbeutel 3 in die gezeichnete, aufgefaltete Gebrauchslage zu bringen; auch ist es denkbar, den Verschluss 11 mittels des dann in der Schüssel 1 herrschenden Unterdrucks zu verschwenken. Der Verschluss 11 kann aber ebensogut über einen getrennten Motor oder vorzugsweise über einen Fussschalter betätigt werden.

Fig.4 zeigt, wie der Sitzrand 2 vom Fäkalienbeutel 3 abgedeckt wird, der hier einen über den Sitzrand 2 aussen herabhängenden Sitzring 30 aufweist.

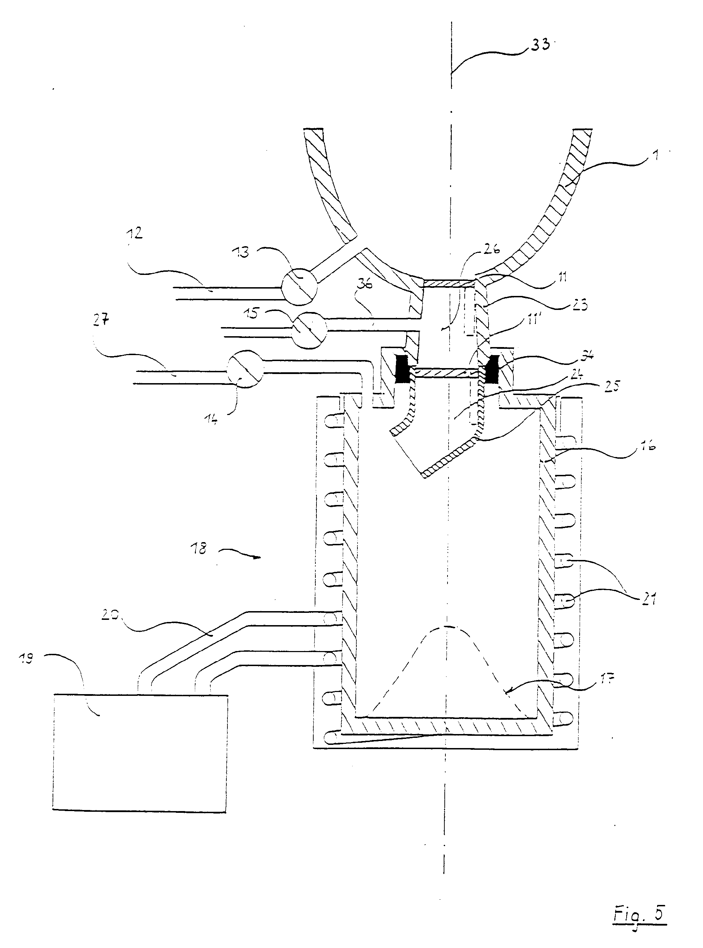

In Fig.5 ist insbesondere die Gefriereinrichtung gezeigt, die einen Sammelbehälter (Kühlraum 16) für die Fäkalien kühlt. Dieser Sammelbehälter weist vorzugsweise eine strichliert (17) dargestellte Form auf. Die angedeutete kegelförmige Ausbuchtung des Bodens des Sammelbehälters ermöglicht eine gleichmässigere Verteilung der Fäkalienbeutel 3 im Behälter. Um die gewünschte, möglichst gleichmässige Verteilung der Fäkalienbeutel 3 im Sammelbehälter zu erreichen, sind noch andere Massnahmen denkbar. So könnte der - dann zylinderförmige - Sammelbehälter um seine Vertikalachse 33 rotierbar ausgebildet sein. Oder es wird ein über eine Ablaufmanschette 34 an den Abgangstutzen 23 angebrachtes Fallrohr 24, das ein schräg nach unten ragendes Rohrknie 25 aufweist, beispielsweise synchron mit dem Betätigen des Verschlusses 11 bei jeder Benutzung des Klosetts um einen bestimmten Winkelbetrag, z.B. um 20 bis 45°, verdreht (Fig.5).

Der Sammelbehälter besteht möglichst aus einem wenig haftenden Material, z.B. Teflon (R), oder ist mit einem solchen Material beschichtet. Eine Kühleinrichtung 18 kühlt die Wände und den Boden des Kühlraums 16. Die Kühleinrichtung wird über eine geeignete Kältemaschine mit Kältemitteln beschickt, so dass der Inhalt des Sammelbehälters gefriert. Das Kühlsystem ist nach aussen wärmeisoliert, so dass der Kühlraum 16 auch bei Ausfall der Kühleinrichtung 18 über längere Zeit seine Gefriertemperatur beibehält.

Bei einer bevorzugten Anwendung des Klosetts, in Flugzeugen, wird der Kühlraum 16, und damit der Sammelbehälter, gegebenenfalls mit Hilfe von Kaltluft gekühlt, die in grossen Höhen ohnedies vorhanden ist. Hierfür braucht lediglich eine geeignete Zu- und Ableitung für die Aussenluft zum Kühlraum 16 vorgesehen sein, an dem sich die Kühlschlange 21 der Kühleinrichtung 18 befindet, oder es ist hierfür eine getrennte Kühlschlange vorgesehen, oder man kann sogar die vorhandene Kühlschlange dafür benutzen.

Es kann auch ein beispielsweise als Wärmetauscher ausgebildeter Hilfskühler 19 mit Kühlleitungen 20 vorgesehen sein, der beispielsweise der kalten Aussenluft ausgesetzt wird. Dadurch wird eine elektrische Kühlung während derjenigen Zeit überflüssig, in der ausreichend Kaltluft zur Verfügung steht.

Um einerseits die Kühlung der Fäkalien zu optimieren, andererseits aber auch bei starker Frequentierung doch eventuell auftretende Geruchsbelästigungen zu vermeiden, ist, wie in Fig.5 dargestellt, der Abgangsstutzen 23 als Schleuse 26 ausgebildet, mit dem Verschluss 11 gegen die Klosettschüssel 1 und dem Verschluss 11' gegen den Kühlraum 16. Die beiden Verschlüsse 11 und 11' werden also nie gleichzeitig offenstehen, der Verschluss 11' öffnet erst bei geschlossenem Verschluss 11, um den Fäkalienbeutel 3 in den Kühlraum 16 fallenzulassen.

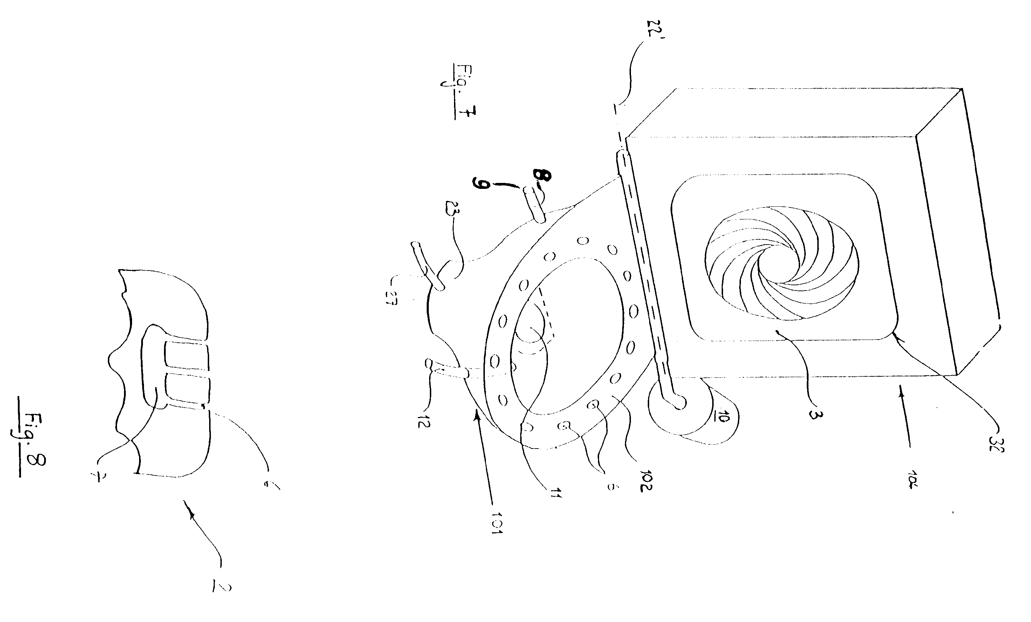

Der Fäkalienbeutel 3 (Fig.6) weist einen Sack 31 auf, der an einen, dem Sitzrand 2 der Klosettschüssel 1 entsprechend ausgebildeten Sitzring 30 anschliesst, und der sich nach unten zu verjüngt und aus spiralig zulaufenden Falten gebildet ist. Diese Falten ermöglichen (in der Art von Tabaksbeuteln) ein sehr flaches Zusammenlegen der Fäkalienbeutel 3, da sie sich nebeneinander und nicht übereinander falten.

Bei einer besonders gebrauchsfreundlichen Variante des Klosetts (Fig.7) wird nicht der an der Klosettbrille ausgebildete Sitzrand 2 aufgeklappt, sondern es wird der Spender 104 auf den Sitzrand 102 herabgeklappt. Dieses Herabklappen geschieht vorzugsweise mittels eines Motors 10, der den Spender 104 um eine Achse 22' schwenkt, so dass der Spender die Klosettschüssel 101 wie ein Deckel verschliesst. Denkbar wäre aber auch, dass dieses Abdecken der Klosettschüssel 101 durch den Spender 104 infolge seitlichen Verschwenkens oder Verschiebens geschieht. Der Sitzrand 102, der in oben beschriebener Weise mit Sauglöchern 6 versehen ist, kann hier an der Oberseite der Klosettschüssel 101 selbst ausgebildet sein. Durch das Anlegen des Unterdrucks an die Sauglöcher 6 werden die hier flachliegenden Fäkalienbeutel 3 aus dem Spender 104 entnommen. Um zu vermeiden, dass mehr als ein Fäkalienbeutel 3 aus dem Spender 104 entnommen wird, ist ein mit dem Einschalten des Unterdrucks zu den Sauglöchern gekoppelter, nicht dargestellter Rückhaltemechanismus vorgesehen.

Die Spenderöffnung 32 ist, da die Fäkalienbeutel 3 an ihrem äussersten Rand durch diese gehalten werden, etwas kleiner als die durch den Aussenrand des Sitzrandes 2 (Fig.1 und 2) bzw. 102 (Fig.7) vorgegebene Öffnung. Befinden sich Spender 4 (Fig.1 und 2) bzw. 104 (Fig.7) und Sitzrand 2 bzw. 102 in der zur Entnahme der Fäkalienbeutel 3 nötigen Parallellage, so liegen die Sauglöcher 6 innerhalb der Spenderöffnung 32 und legen auf diese Art die ideale Dimensionierung der Spenderöffnung 32 fest. Dadurch können die Fäkalienbeutel 3 optimal über die Sauglöcher 6 entnommen werden.

Der Fäkalienbeutel 3 ist wenigstens zeitlich begrenzt wasser- und reissfest, und besteht vorzugsweise aus Recyclingpapier oder einem anderen biologisch abbaubaren Material, beispielsweise einer natürlichen, verrottbaren Folie.

Das Klosett kann durch seine Steuerung so betätigt werden, dass die Benutzung in grösstem Masse hygienisch wird; auf sämtliche manuelle Bedienung kann verzichtet werden; einzig die Betätigung eines Schalters, der insbesondere fussbedienbar ist, zum Ende der Benutzung, ist vorgesehen.

Um dieser Zielsetzung zu genügen, muss nach einer Benutzung des Klosetts und dem Betätigen eines Schalters, beispielsweise eines Fusshebels, mindestens

1. der Unterdruck an den Sauglöchern 6 aufgehoben,
2. der Unterdruck an der Klosettschüssel 1 aufgehoben,
3. die Klappe 11 geöffnet,
4. Spender 4 bzw. 104 und Sitzrand 2 bzw. 102 in die zur Fäkalienbeutelentnahme notwendige Relativlage gebracht,
5. Unterdruck über die Saugleitung 9 an die Sauglöcher 6 zur Entnahme des Fäkalienbeutels 3 gelegt,
6. die Klappe 11 geschlossen und Unterdruck an die Klosettschüssel gelegt,
7. Spender 4 bzw. 104 und Sitzrand 2 bzw. 102 in Gebrauchsstellung gebracht werden.

Je nach Ausführung des Klosetts, seiner mehr oder weniger öffentlichen Verwendung wird dieser Ablauf durch weitere Zwischenschritte zu ergänzen sein.

Zur besseren Übersicht über die einzelnen Ablaufschritte dient Tabelle 1. Mögliche, ergänzende Zwischenschritte, besonders in bezug auf eine fallweise vorhandene Schleuse, sind in der nachfolgenden Ablaufbeschreibung dargestellt.

Verschiedene Ausführungsformen der Erfindung werden in den folgenden Beispielen beschrieben.

Beispiel 1:

Der Spender 104 ist abklappbar,der Sitzrand 102 fix (Fig.7).

Beim Betreten des Klosetts durch einen Benutzer sollte der Spender 104 auf dem Sitzrand 102 aufliegen. Durch das leichte Anheben des Spenders 104 wird über die erste Saugleitung 8 an die Sauglöcher 6 ein Unterdruck gelegt, wodurch ein Fäkalienbeutel 3 dem Spender 104 entnommen wird. Eventuell gleichzeitig, aber vorzugsweise mit einer zeitlichen Verzögerung, gesteuert über ein Steuerglied, wird über die Unterdruckleitung 12 Unterdruck in der Klosettschüssel 101 erzeugt, wodurch der Fäkalienbeutel 3 aufgefaltet wird (Fig.6). Der Spender 104 wird während dieser Vorgänge mittels des Motors 10 vollends zurückgeklappt, die Unterdruckleitung 12 zur Klosettschüssel 101 wird vorzugsweise abgeschaltet. Ist der Benutzer fertig, so wird er in bekannter Weise einen Schalter zu betätigen haben, wobei Fussbedienung vorzuziehen ist. Dieser Schalter, der z.B. über einen Hebelmechanismus den Verschluss 11 öffnet, bewirkt gleichzeitig, dass der Unterdruck zu den Sauglöchern 6 abgeschaltet wird, hingegen ein Unterdruck an die zweite Saugleitung 27 gelegt wird, die in den Kühlraum 16 mündet. Falls eine Schleuse 26 zwischen Klosettschüssel 101 und letzterem vorgesehen ist (Fig.5), die sowohl die Geruchsbelästigung vermeiden als auch als Kühlschleuse dienen soll, ist hier, gegebenenfalls gleichzeitig mit der zweiten Saugleitung 27, die dritte Saugleitung 36 einzuschalten. Dadurch werden die Fäkalienbeutel 3, besonders

| Ablauf der Benutzung / Teile | 1 nicht benutzt (Wartestellung) | 2 Anheben des Spenders 104 zur Benutzung | 3 Ende der Benutzung Betätigung des Fusshebels | 4 Vorbereitung für neuerliche Benutzung |
|---|---|---|---|---|
| Spender 104 | liegt auf dem Sitzrand 102 | wird in Vertikalstellung bewegt | wird auf den Sitzrand 102 geklappt | liegt auf dem Sitzrand 102 |
| Motor 10 | | bewegt Spender 104 | bewegt Spender 104 | |
| Fäkalienbeutel 3 | ist aus Spender 104 entnommen und entfaltet | wird haftend am Sitzrand 102 fixiert | wird vom Sitzrand 102 gelöst und entsorgt | wird entnommen und entfaltet |
| erste Saugleitung 3 zu den Sauglöchern 6 | ohne Unterdruck | mit Unterdruck | ohne Unterdruck | mit Unterdruck |
| Unterdruckleitung 12 in die Klosettschüssel 1 | ohne Unterdruck | ohne oder mit Unterdruck je nach Programmwunsch | ohne Unterdruck | mit Unterdruck |
| erster Verschluss 11 | geschlossen | geschlossen | geöffnet | geschlossen |
| zweite Saugleitung 27 in den Kühlraum 16 | ohne Unterdruck | ohne Unterdruck | mit Unterdruck | ohne Unterdruck |
| Rohrknie 25 des Fallrohrs 24 bzw. rotierender Sammelbehälter | | Drehen des Rohrknies 25 bzw. kurzzeitige Rotation des Sammelbehälters | | |

TABELLE 1

falls sie im Bereich des Verschlusses 11 klemmen sollten, weiterbefördert. Die Schleuse 26 funktioniert in bekannter Weise, es wird, wie oben beschrieben, nach Schliessen des Verschlusses 11 der Unterdruck über das Ventil 15 zur dritten Saugleitung 36 aufgehoben und der Verschluss 11'geöffnet; der Fäkalienbeutel 3 wird, unterstützt vom Unterdruck der zweiten Saugleitung 27, in den Kühlraum befördert. Endet das Fallrohr 24 in einem Rohrknie 25 (Fig.5), oder aber ist der Sammelbehälter rotierbar ausgebildet, so wird vorzugsweise gleichzeitig mit dem Öffnen des Verschlusses 11 (bzw. auch des Verschlusses 11' im Falle einer Schleuse 26) das Rohrknie 25 um einen bestimmten Winkelbetrag, z.B. um 20° bis 45°, um die Achse 33 verdreht, bzw. der Sammelbehälter kurzzeitig in Rotation versetzt. Der Verschluss 11' wird wieder geschlossen; der Spender 104 wird spätestens jetzt wieder mittels des Motors 10 auf den Sitzrand 102 herabgeklappt, wobei vorzugsweise dieser Vorgang mit dem Einschalten des Unterdrucks an der zweiten Saugleitung 27 (bzw. der dritten Saugleitung 36) gekoppelt ist. Dadurch ist das Klosett nicht irrtümlich benutzbar, bevor der Entsorgungsvorgang für die Fäkalienbeutel 3 beendet ist.

Beispiel 2:

Der an der Klosettbrille ausgebildete Sitzrand 2 ist aufklappbar; der Spender 4 ist fix. (Fig.1).

Das Klosett sollte nur benutzbar sein, wenn ein Fäkalienbeutel 3 bereits dem Spender 4 entnommen, auf dem Sitzrand 2 durch den an den Sauglöchern 6 liegenden Unterdruck fixiert ist und durch den über die Unterdruckleitung 12 in die Klosettschüssel 1 gelegten Unterdruck ausgefaltet wurde. Durch geeignete Schaltung, bzw. Programmsteuerung wird sichergestellt, dass die Klosettbrille, also der klappbare Sitzrand 2, dann nicht mehr hoch gehoben werden kann, wodurch eine Benutzung des Klosetts ohne Verwendung der Fäkalienbeutel 3 vermieden werden soll. Nach Benutzung des Klosetts wird in entsprechender Weise, wie oben beschrieben, ein Schalter zu bedienen sein; der Entsorgungsvorgang entspricht dem oben beschriebenen, mit dem Unterschied, dass er nach Entsorgung des benutzten Beutels erst nach Hochklappen des Sitzrandes 2, Entnahme eines Fäkalienbeutels 3, Abklappen und Feststellen des Sitzrandes 2, sowie Auffalten des neuen Beutels beendet ist.

Wie in den obigen Beispielen beschrieben, sollte das Klosett immer nur dann benutzbar sein, wenn ein Fäkalienbeutel 3 bereits aufgefaltet auf dem Sitzrand liegt. Aus Energiespargründen wird im allgemeinen der Unterdruck nicht ständig an den Sauglöchern 6 liegen, so dass, um das Haften der Fäkalienbeutel 3 am Sitzrand 2 bzw. 102 während einer Benutzung zu gewährleisten, dieser Unterdruck bereitgestellt werden muss. Das kann auf verschiedene Weise erfolgen, z.B. kombiniert mit dem Öffnen der Klosett-Türe, über einen optischen Sensor, der nicht als Anwesenheits- sondern als Benutzungssensor ausgebildet sein sollte, oder auch, im Fall des die Klosettschüssel 101 abdeckenden Spenders 104, durch leichtes Anheben des Spenders 104.

Die einzelnen Vorgänge werden vorzugsweise über geeignete Zeitglieder gesteuert; einzig das Öffnen der Verschlusses 11 wird in üblicher Weise durch den Benutzer auszulösen sein, z.B. durch Betätigen eines Fusshebels.

Sollte nun ein Benutzer die Betätigung dieses Schalters (Fusshebel) vergessen, so kann ein Ablaufplan-Regler vorgesehen sein, der eine neuerliche Benutzung (Klosett-Türe, Sensor) vor Ablauf des Entsorgungsvorgangs registriert und den Entsorgungsvorgang selbsttätig startet, ab dem Öffnen des Verschlusses 11 bis zur Bereitstellung neuer Fäkalienbeutel.

Ein Sperrschalter für die Benutzung des Klosetts, kombiniert mit einem Signal für das Bedienungspersonal, sollte vorgesehen sein, wenn der letzte Fäkalienbeutel 3 aus dem Spender 4 bzw. 104 entnommen wurde. Bei der Variante mit dem schwenkbaren Spender 104 würde sich dieser beispielsweise nicht mehr anheben lassen, ev. in Verbindung mit einem Lichtzeichen. Ausführung, Ausstattung und Steuerungsmöglichkeiten des Klosetts eröffnen ein breites Anwendungsgebiet, besonders in Flugzeugen.

Nicht nur die erwähnte kalte Aussenluft, sondern auch Unterdruck steht z.B. bei Flugzeugen ab einer gewissen Flughöhe durch die Differenz zwischen Kabineninnendruck und dem Druck der umgebenden Atmosphäre ohnedies zur Verfügung. Bei zu geringem oder nicht vorhandenem Druckgefälle , z.B. wenn das Flugzeug steht, kann der für die Funktion der Anlage erforderliche Unterdruck leicht über ein geeignetes Gebläse oder eine Venturidüse erzeugt, bzw. die Kühlwirkung durch eine herkömmliche Kühlvorrichtung ersetzt werden. Die Kühlvorrichtung kann auch die Kühlwirkung der Kaltluft unterstützen, wenn diese nicht ausreichen sollte.

**Patentansprüche**

1. Klosett mit einer Klosettschüssel (1;101), an deren Oberseite ein Sitzrand (2;102) und an deren Unterseite ein Abgangsstutzen (23) vorgesehen ist, sowie mit einem Spender (4;104) für Fäkalienbeutel (3), die vereinzelt dem Spender (4;104) entnehmbar und mit Hilfe von Unterdruck am Sitzrand (2;102) befestigbar sind, dadurch gekennzeichnet, dass der Spender (4;104) einen Aufnahmeraum für einen Stapel flach übereinander liegender Fäkalienbeutel (3) aufweist, dass der Sitzrand (2;102) mit Sauglöchern (6) ver-

7

sehen ist, die an eine Saugleitung (8) anschliessbar sind, dass Sitzrand (2;102) und Spender (4;104) in eine Relativlage bringbar sind, in der der Sitzrand (2;102) und die flach liegenden Fäkalienbeutel (3) zueinander parallel liegen, wobei der jeweils vorderste Fäkalienbeutel (3) aus dem Spender (4;104) ansaugbar ist, und dass in die Klosettschüssel (1;101) zusätzlich eine Unterdruckleitung (12) einmündet.

2. Klosett nach Anspruch 1, dadurch gekennzeichnet, dass der die Sauglöcher (6) aufweisende Sitzrand (2) an einer an der Klosettschüssel (1) um eine Schwenkachse (22) schwenkbar befestigten Klosettbrille ausgebildet ist, wobei vorzugsweise wenigstens eines der folgenden Merkmale vorgesehen ist:

a) eine den Unterdruck an die Sauglöcher (6) führende erste Saugleitung (8) ist im Bereiche der Schwenkachse (22) an den schwenkbaren Sitzrand (2) angeschlossen;

b) der den Stapel Fäkalienbeutel (3) aufnehmende Spender (4) ist unbeweglich, insbesondere mit vertikaler Lage des Stapels, befestigt.

3. Klosett nach Anspruch 1, dadurch gekennzeichnet, dass der die Sauglöcher (6) aufweisende Sitzrand (102) vom Rande der Klosettschüssel (101) selbst gebildet ist, und dass der den Stapel Fäkalienbeutel (3) aufnehmende Spender (104) aus einer Ruhelage, in der er von der Oberseite der Klosettschüssel (101) entfernt ist, in eine Abdecklage bringbar ist, in der er die Klosettschüssel (101) deckelartig überdeckt, wobei der Spender (4;104) vorzugsweise um eine, insbesondere horizontale, Achse (22') schwenkbar ist.

4. Klosett nach einem der vorhergehenden Ansprüche, dadurch gekennzeichnet, dass ein - insbesondere pneumatischer, ein Kolben-Zylinder-Aggregat aufweisender - Motor (10) vorgesehen ist, durch den der Sitzrand (2;102) und der Spender (4;104) in die genannte Relativlage bringbar sind.

5. Klosett nach einem der vorhergehenden Ansprüche, dadurch gekennzeichnet, dass an den von der Klosettschüssel (1; 101) umschlossenen Raum eine über den Abgangsstutzen (23) verbundene Beutellagerkammer (16) angeschlossen ist.

6. Klosett nach Anspruch 5, dadurch gekennzeichnet, dass der Abgangsstutzen (23) in ein Fallrohr (24) mündet, das vorzugsweise in einem - insbesondere beweglichen - Rohrknie (25) endet.

7. Klosett nach Anspruch 6, dadurch gekennzeichnet, dass zwischen der Klosettschüssel (1;101) und dem Ende des Fallrohrs (24), insbesondere im Bereich des Abgangsstutzens (23), eine durch zwei Verschlüsse (11 und 11') gebildete Schleuse (26) vorgesehen ist, in die vorzugsweise eine dritte Saugleitung (36) einmündet.

8. Klosett nach einem der vorhergehenden Ansprüche, dadurch gekennzeichnet, dass im Anschluss an den Abgangsstutzen (23), insbesondere unterhalb der Klosettschüssel (1;101), die Beutellagerkammer (16) als Kühlraum mit einer Kühleinrichtung (18) für die Fäkalien ausgebildet ist.

9. Klosett nach Anspruch 8, dadurch gekennzeichnet, dass der Kühlraum (16) über den, z.B. klappenartigen, Verschluss (11 bzw. 11') abschliessbar und/oder mit einer zweiten Saugleitung (27) verbunden ist.

10. Klosett nach Anspruch 9, dadurch gekennzeichnet, dass der Kühlraum (16) von einem herausnehmbaren, vorzugsweise rotierbar ausgebildeten Sammelbehälter gebildet ist, der von einer ortsfest angeordneten Zu- bzw. Ableitung für ein Kühlmittel umschlossen ist.

11. Klosett nach Anspruch 9 oder 10, dadurch gekennzeichnet, dass die Kühleinrichtung (18) für eine Temperatur unter -10°C, insbesondere unter -15°C ausgelegt und vorzugsweise auch an die kalte Aussenluft anschliessbar ist.

12. Steuerung für ein Klosett nach einem der Ansprüche 1, oder 2 und 4 bis 11, dadurch gekennzeichnet, dass zumindest folgende Steuerglieder, ausgehend von einem benutzten Klosett, vorgesehen sind:
- für das Schliessen des Ventils (9) zur ersten Saugleitung (8) und des Ventils (13) zur Unterdruckleitung (12) zwecks Lösen des Fäkalienbeutels (3) von der Klosettschüssel (1);
- für das Öffnen des Verschlusses (11) zwecks Entfernen des Fäkalienbeutels (3);
- für das Einschalten des Motors (10) zwecks Hochklappen des Sitzrandes (2) auf den Spender (4);
- für das Öffnen des Ventils (9) zur ersten Saugleitung (8) an die Sauglöcher (6) zwecks Entnahme eines neuen Fäkalienbeutels (3) und dessen Fixieren am Sitzrand (2);
- für das Schliessen des Verschlusses (11);

- für das Öffnen des Ventils (13) zur Unterdruckleitung (12) zwecks Entfalten des Fäkalienbeutels (3);
- für das Einschalten des Motors (10) zum Abklappen des Sitzrandes (2) und sein Feststellen.

13. Steuerung für ein Klosett nach einem der Ansprüche 1 und 3 bis 11, dadurch gekennzeichnet, dass zumindest folgende Steuerglieder, ausgehend von einem benutzten Klosett, vorgesehen sind:
    - für das Schliessen des Ventils (9) zur ersten Saugleitung (8) und des Ventils (13) zur Unterdruckleitung (12) zwecks Lösen des Fäkalienbeutels (3) von der Klosettschüssel (101);
    - für das Öffnen des Verschlusses (11) zwecks Entfernen des Fäkalienbeutels (3);
    - für das Einschalten des Motors (10) zwecks Abklappen des Spenders (104) auf den Sitzrand (102);
    - für das Öffnen des Ventils (9) zur ersten Saugleitung (8) an die Sauglöcher (6) zwecks Entnahme eines neuen Fäkalienbeutels (3) und dessen Fixieren am Sitzrand (102);
    - für das Schliessen des Verschlusses (11);
    - für das Öffnen des Ventils (13) zur Unterdruckleitung (12) zwecks Entfalten des Fäkalienbeutels (3);
    - für das Einschalten des Motors (10) beim Anheben des Spenders (104) zum Zurückklappen des Spenders (104).

14. Steuerung nach Anspruch 12 oder 13, dadurch gekennzeichnet, dass sie wenigstens eines der folgenden weiteren Steuerglieder aufweist:
    - ein vorzugsweise zeitabhängiges Steuerglied für das Schliessen des Ventils (13) zur Unterdruckleitung (12) in die Klosettschüssel (1;101) nach dem Auffalten des Fäkalienbeutels (3) zwecks Einsparung an Saugleistung während der Benutzung;
    - ein mit dem Öffnen des ersten Verschlusses (11) gekoppeltes Steuerglied für das Öffnen des Ventils (14) an der zweiten Saugleitung (27) zwecks erleichterter Beförderung des Fäkalienbeutels (3) in den Kühlraum (16);
    - ein mit dem Öffnen des ersten Verschlusses (11) gekoppeltes Steuerglied für das Verdrehen des Rohrknies (25) um jeweils vorzugsweise 20° - 45° zwecks besserer Verteilung der Fäkalienbeutel (3) im Kühlraum (16);
    - ein mit dem Öffnen des ersten Verschlusses (11) gekoppeltes Steuerglied für die kurzzeitige Rotation des als Sammelbehälter ausgeführten Kühlbehälters (16) zwecks besserer Verteilung der Fäkalienbeutel (3) im Kühlraum (16);
    - ein Steuerglied für das Schliessen des ersten Verschlusses (11) zwecks Verminderung von Geruchsbelästigung und zur Schaffung eines geschlossenen Unterdruckraums in der Klosettschüssel (1;101) zwecks Auffalten des Fäkalienbeutels (3);
    - ein mit dem Schliessen des ersten Verschlusses (11) gekoppeltes Steuerglied für das Schliessen des Ventils (14) an der zweiten Saugleitung (27) zwecks Einsparung von Saugleistung nach Entsorgung des Fäkalienbeutels (3);
    - ein mit dem Anheben des klappbaren Spenders (104) gekoppeltes Steuerglied für das Öffnen des Ventils (9) zur ersten Saugleitung (8) zwecks haftendem Fixieren der Fäkalienbeutel (3) am Sitzrand (102);
    - ein, beispielsweise als Benutzungssensor ausgebildetes, oder mit dem Öffnen der Klosett-Türe gekoppeltes Steuerglied für das Öffnen des Ventils (9) an die erste Saugleitung (8) zwecks Bereitstellen des Unterdrucks zum haftenden fixieren der Fäkalienbeutel (3) am Sitzrand (2);
    - ein vorzugsweise als Ablaufplan-Regler ausgebildetes Steuerglied, gekoppelt mit dem beispielsweise fussbedienten Schalter zwecks Durchführung des Entsorgungsvorgangs und der Bereitstellung eines neuen Fäkalienbeutels (3) nach Betätigung des Schalters;
    - ein vorzugsweise als Ablaufplan-Regler ausgebildetes Steuerglied, gekoppelt mit dem beispielsweise fussbedienten Schalter und dem als Benutzungssensor ausgebildeten oder mit dem Öffnen der Klosett-Tür gekoppelten Steuerglied zwecks Vorbereitung des Klosetts zur Benutzung, auch wenn ein Vorbenutzer vergessen haben sollte, den Schalter nach Benutzung zu betätigen;
    - ein mit der Entnahme des letzten Fäkalienbeutels (3) aus dem Spender (104) gekoppeltes Steuerglied für das Feststellen des klappbaren Spenders (104);
    - ein mit der Entnahme des letzten Fäkalienbeutels (3) aus dem Spender (4;104) gekoppeltes Steuerglied für das Auslösen eines Signals als Zeichen für die Nichtbenutzbarkeit des Klosetts für Benutzer und Bedienungspersonal;
    - ein mit einem Temperaturfühler gekoppeltes Steuerglied für das Umschalten von Aussenluftkühlsystem zur internen Kühleinrichtung, beispielsweise bei Verwendung im Flugzeug;
    - ein mit einem Druckmesser gekoppeltes Steuerglied für das Umschalten von interner Druckquelle zum niedrigen Aussendruck, beispielsweise bei Verwendung in Flugzeugen.

15. Steuerung nach Anspruch 14, für ein Klosett nach Anspruch 7, dadurch gekennzeichnet, dass sie wenigstens eines der folgenden, weiteren Steuerglieder aufweist:
- ein mit dem Öffnen des ersten Verschlusses (11) gekoppeltes Steuerglied für das Öffnen des Ventils (15) zur dritten Saugleitung (36) in die Schleuse (26) zwecks erleichterter Beförderung der Fäkalienbeutel (3) in die Schleuse (26);
- ein mit dem Schliessen des ersten Verschlusses (11) gekoppeltes Steuerglied für das Öffnen des zweiten Verschlusses (11') und gleichzeitiges Öffnen des Ventils (14) zur zweiten Saugleitung (27) zwecks erleichterter Beförderung des Fäkalienbeutels (3) aus der Schleuse (26) in den Kühlraum (16);
- ein mit dem Schliessen des ersten Verschlusses (11) gekoppeltes Steuerglied zum Schliessen des Ventils (15) zur dritten Saugleitung (36) in die Schleuse (26) und zum gleichzeitigen Öffnen des zweiten Verschlusses (11');
- ein mit dem Schliessen des zweiten Verschlusses (11') gekoppeltes Steuerglied für das Schliessen des Ventils (14) an der zweiten Saugleitung (27) zwecks Einsparung von Saugleistung nach Entsorgung des Fäkalienbeutels (3).

16. Fäkalienbeutel (3) für ein Klosett nach einem der Ansprüche 1 bis 11, dadurch gekennzeichnet, dass der an einen dem Sitzrand (2;102) entsprechend ausgebildeten Sitzring (30) anschliessende Sack (31) balgartig flach faltbar ist.

17. Fäkalienbeutel (3) nach Anspruch 16, dadurch gekennzeichnet, dass er spiralig gefaltet ist und vorzugsweise aus verrottbarem Material besteht.


## Claims

1. Lavatory comprising a lavatory bowl (1; 101) having an upper side on which a seat edge (2; 102) is provided and a lower side on which a base connection (23) is provided, and comprising a dispenser (4; 104) for excrement bags (3) which can be removed individually from the dispenser (4; 104) and secured to the seat edge (2; 102) with the aid of a low pressure, characterised in that the dispenser (4; 104) has a receptacle for a stack of excrement bags (3) lying flat one on top of the other, that the seat edge (2; 102) is provided with suction holes (6) which can be connected to a suction line (8), that seat edge (2; 102) and dispenser (4; 104) can be brought into a relative position in which the seat edge (2; 102) and the flat excrement bags (3) are parallel to one another, whereby the foremost excrement bag (3) can be sucked out of the dispenser (4; 104), and that in addition a low pressure line (12) opens into the lavatory bowl (1; 101).

2. Lavatory according to Claim 1, characterised in that the seat edge (2) having the suction holes (6) is formed on a lavatory seat which is fastened so that it can rotate about an axis of rotation (22) on the lavatory bowl (1), preferably at least one of the following features being provided:
a) a first suction line (8) for applying the low pressure to the suction holes (6) is connected to the rotatable seat edge (2) in the region of the axis of rotation (22);
b) the dispenser (4) holding the stack of excrement bags (3) is fastened in an immobile manner, in particular with a vertical position of the stack.

3. Lavatory according to Claim 1, characterised in that the seat edge (102) having the suction holes (6) is formed by the edge of the lavatory bowl (101) itself, and that the dispenser (104) holding the stack of excrement bags (3) can be brought from a rest position in which it is a distance away from the upper side of the lavatory bowl (101) to a covering position in which it covers the lavatory bowl (101) in the manner of a lid, the dispenser (4; 104) preferably being rotatable about an axis (22'), in particular a horizontal axis.

4. Lavatory according to any of the preceding Claims, characterised in that a motor (10) - in particular a pneumatic motor having a piston/cylinder unit - is provided, by means of which motor the seat edge (2; 102) and the dispenser (4; 104) can be brought into the stated relative position.

5. Lavatory according to any of the preceding Claims, characterised in that a bag storage chamber (16) connected via the base connection (23) is connected to the space enclosed by the lavatory bowl (1; 101).

6. Lavatory according to Claim 5, characterised in that the base connection (23) is connected to a drop pipe (24) which preferably ends in a pipe bend (25) - in particular a movable one.

7. Lavatory according to Claim 6, characterised in that a lock (26) formed by two closures (11 and 11') is provided between the lavatory bowl (1; 101) and the end of the drop pipe (24), in particular in the region of the base connection (23), into which lock a third suction line (36) preferably enters.

8. Lavatory according to any of the preceding Claims, characterised in that, adjacent to the base connection (23), in particular below the lavatory bowl (1; 101), the bag storage chamber (16) is in the form of a cool chamber having a cooling means (18) for the excrements.

9. Lavatory according to Claim 8, characterised in that the cool chamber (16) can be closed by means of the -for example flap-like - closure (11 or 11') and/or is connected with a second suction line (27).

10. Lavatory according to Claim 9, characterised in that the cool chamber (16) is formed by a removable, preferably rotatable collecting container enclosed by a stationary inlet and outlet line or a refrigerant.

11. Lavatory according to Claim 9 or 10, characterised in that the cooling means (18) is designed for a temperature below -10°C, in particular below -15°C, and preferably can also be connected to cold outside air.

12. Control for a lavatory according to any of Claims 1 or 2 and 4 to 11, characterised in that at least the following control elements are provided, with reference to a used lavatory:
    - for closing the valve (9) in the first suction line (8) and the valve (13) in the low pressure line (12) for detaching the excrement bag (3) from the lavatory bowl (1);
    - for opening the closure (11) for removal of the excrement bag (3);
    - for switching on the motor (10) to swivel the seat edge (2) up to the dispenser (4);
    - for opening the valve (9) in the first suction line (8) to the suction holes (6) to remove a new excrement bag (3) and fix said bag to the seat edge (2);
    - for closing the closure (11);
    - for opening the valve (13) in the low pressure line (12) to unfold the excrement bag (3);
    - for switching on the motor (10) for swivelling down the seat edge (2) and fixing it.

13. Control for a lavatory according to any of Claims 1 and 3 to 11, characterised in that at least the following control elements are provided, with reference to a used lavatory:
    - for closing the valve (9) in the first suction line (8) and the valve (13) in the low pressure line (12) for detaching the excrement bag (3) from the lavatory bowl (101);
    - for opening the closure (11) to remove the excrement bag (3);
    - for switching on the motor (10) to swivel the dispenser (104) down onto the seat edge (102);
    - for opening the valve (9) in the first suction line (8) to the suction holes (6) to remove a new excrement bag (3) and fix said bag to the seat edge (102);
    - for closing the closure (11);
    - for opening the valve (13) in the low pressure line (12) to unfold the excrement bag (3);
    - for switching on the motor (10) during raising of the dispenser (104) to swivel back the dispenser (104).

14. Control according to Claim 12 or 13, characterised in that it has at least one of the following further control elements:
    - a preferably time-dependent control element for closing the valve (13) in the low pressure line (12) to the lavatory bowl (1; 101) after the excrement bag (3) has been unfolded, in order to save suction power during use;
    - a control element, coupled with the opening of the first closure (11), for opening the valve (14) to the second suction line (27) to facilitate conveying of the excrement bag (3) into the cool chamber (16);
    - a control element, coupled with the opening of the first closure (11), for rotating the pipe bend (25) preferably through 20° - 45° in each case for better distribution of the excrement bags (3) in the cool chamber (16);
    - a control element, coupled with the opening of the first closure (11), for brief rotation of the cool container (16) in the form of a collecting container, for better distribution of the excrement bags (3) in the cool chamber (16);
    - a control element for closing the first closure (11) to reduce annoying odours and to create a closed low pressure space in the lavatory bowl (1; 101) to unfold the excrement bag (3);
- a control element, coupled with the closing of the first closure (11), for closing the valve (14) to the second suction line (27) to save suction power after disposal of the excrement bag (3);
- a control element, coupled with the raising of the swivelling dispenser (104), for opening the valve (9) in the first suction line (8) for fixing the excrement bags (3) firmly to the seat edge (102);
- a control element, for example in the form of a use sensor or coupled with the opening of the lavatory door, for opening the valve (9) to the first suction line (8) to provide the low pressure for fixing the excrement bags (3) firmly to the seat edge (2);
- a control element preferably in the form of a sequence regulator and coupled with the switch, which for example is foot-operated, for carrying out the disposal process and providing a new excrement bag (3) after activation of the switch;
- a control element, preferably in the form of a sequence regulator and coupled with the switch, which for example is foot-operated, and with the control element which is in the form of a use sensor or is coupled with the opening of the lavatory door, for preparing the lavatory for use, even if a previous user has forgotten to activate the switch after use;
- a control element, coupled with the removal of the final excrement bag (3) from the dispenser (104), for fixing the swivelling dispenser (104);
- a control element, coupled with the removal of the final excrement bag (3) from the dispenser (4; 104), for triggering a signal as an indication to users and service staff that the lavatory cannot be used;
- a control element, coupled with a temperature sensor, for switching over from an outside air cooling system to the internal cooling means, for example when used in an aircraft;
- a control element, coupled with a pressure gauge, for switching over from an internal pressure source to the low outside pressure, for example when used in aircraft.

15. Control according to Claim 14, for a lavatory according to Claim 7, characterised in that it has at least one of the following, further control elements:
- a control element, coupled with the opening of the first closure (11), for opening the valve (15) in the third suction line (36) into the lock (26) to facilitate conveying of the excrement bags (3) into the lock (26);
- a control element, coupled with the closing of the first closure (11), for opening the second closure (11') and simultaneously opening the valve (14) in the second suction line (27) to facilitate conveying of the excrement bag (3) from the lock (26) into the cool chamber (16);
- a control element, coupled with the closing of the first closure (11), for closing the valve (15) in the third suction line (36) into the lock (26) and for simultaneously opening the second closure (11');
- a control element, coupled with the closing of the second closure (11'), for closing the valve (14) to the second suction line (27) to save suction power after disposal of the excrement bag (3).

16. Excrement bag (3) for a lavatory according to any of Claims 1 to 11, characterised in that the pouch (31) connected to a seat ring (30) having a form corresponding to the seat edge (2; 102) is capable of being folded flat in a bellows-like manner.

17. Excrement bag (3) according to Claim 16, characterised in that it is folded spirally and preferably consists of degradable material.

**Revendications**

1. Toilette avec une cuvette (1; 101), dont le haut comporte un siège (2; 102) et le bas un support d'évacuation (23), ainsi qu'un distributeur (4; 104) de sachets à excréments (3), lesquels sont sortis individuellement du distributeur (4; 104) et fixés à l'aide du vide partiel sur le siège (2; 102), caractérisée en ce que le distributeur (4; 104) présente un logement pour recevoir un empilement de sachets à excréments disposés à plat les uns sur les autres (3), que le siège (2; 102) est pourvu de trous d'aspiration (6) qui peuvent être reliés à une conduite d'aspiration (8), que le siège (2, 102) et le distributeur (4; 104) peuvent être amenés dans une position relative dans laquelle le siège (2; 102) et le sachet à excréments (3) disposé à plat sont placés parallèlement l'un par rapport à l'autre, ce qui permet d'aspirer le sachet à excréments (3) le plus à l'avant hors du distributeur (4; 104) et qu'en outre, une conduite de dépression (12) débouche dans la cuvette (1; 101) des toilettes.

**2.** Toilette selon la revendication 1, caractérisée en ce que le siège (2) des toilette présentant des trous d'aspiration (6) est réalisé comme un lunette de toilette fixe sur un axe de pivotement (22), et qu'au moins une des dispositions suivantes est prévue :

　　a) une première conduite d'aspiration (8) appliquant un vide partiel aux trous d'aspiration (6) est raccordée au siège pivotant (2) dans la région de l'axe de pivotement (22);

　　b) le distributeur (4) contenant l'empilement de sachets à excréments (3) ne peut être bougé et, en particulier, il est immobilisé de manière à ce que l'empilement ait une disposition verticale.

**3.** Toilette selon la revendication 1, caractérisée en ce que le siège (102) présentant des trous d'aspiration (6) est constitué par le bord lui-même de la cuvette (101) de toilette, que le distributeur (104) contenant l'empilement de sachets à excréments (3) peut être amené d'une position de repos dans laquelle il est séparé de la partie supérieure de la cuvette (101) des toilettes, vers une position de recouvrement dans laquelle il repose sur la cuvette (101) des toilettes à la manière d'un couvercle, le distributeur (4; 104) pouvant de préférence pivoter par rapport a un axe (22'), et plus particulièrement un axe horizontal.

**4.** Toilette selon l'une des revendications précédentes, caractérisée en ce qu'un moteur (10) est prévu, en particulier un moteur pneumatique avec un système de piston et de cylindre, permettant d'amener le siège (2; 102) et le distributeur (4; 104) dans les positions relatives susmentionnées.

**5.** Toilette selon l'une des revendications précédentes, caractérisée en ce que l'espace fermé de la cuvette (1; 101) de toilette est connecté par un support d'évacuation (23) à un compartiment pour recevoir les sachets (16).

**6.** Toilette selon la revendication 5, caractérisée en ce que le support d'évacuation (23) ouvre sur un tube de descente (24), qui se termine de préférence en un tube coudé (25), en particulier qui peut tourner.

**7.** Toilette selon la revendication 6, caractérisée en ce qu'entre la cuvette (1; 101) des toilettes et l'extrémité du tube de descente (24) et, en particulier dans la région du support d'évacuation (23), il est prévu une écluse (26) constituée de deux obturateurs (11 et 11'), dans laquelle débouche de préférence une troisième conduite d'aspiration (36).

**8.** Toilette selon l'une des revendications précédentes, caractérisée en ce que le compartiment pour recevoir les sachets (16) relié au support d'évacuation (23) et disposé en particulier sous la cuvette (1; 101) de toilette, est conçu comme une chambre refroidie pour les excréments, avec une installation de refroidissement (18).

**9.** Toilette selon la revendication 8, caractérisée en ce que la chambre refroidie (16) peut être fermée par un obturateur (11, éventuellement 11') réalisé par exemple à la manière d'un clapet et/ou qu'elle peut être connectée à une seconde conduite d'aspiration (27).

**10.** Toilette selon la revendication 9, caractérisée en ce que la chambre refroidie (16) est constituée d'un compartiment collecteur , qui est de préférence capable de tourner, en étant entouré d'une conduite d'alimentation/évacuation d'un milieu de refroidissement fixe.

**11.** Toilette selon la revendication 9 ou 10, caractérisée en ce que l'installation de refroidissement (18) est conçue pour une température inférieure à -10 °C et en particulier inférieure à -15°C, de préférence en pouvant également être connectée à l'air externe froid.

**12.** Système de commande de toilettes selon l'une des revendications 1, 2 ou 4 à 11, caractérisé en ce que - partant d'une toilette utilisée - on a prévu au moins les éléments suivants, pour :

　　- la fermeture de la soupape (9) sur la première conduite d'aspiration (8) et de la soupape (13) de la conduite de dépression (12), afin de libérer le sachet d'excréments (3) de la cuvette (1) de toilette;

　　- l'ouverture de l'obturateur (11), afin d'enlever le sachet d'excréments (3);

　　- la mise en route du moteur (10), afin de relever le siège (2) contre le distributeur (4);

　　- l'ouverture de la soupape (9) de la première conduite d'aspiration (8) des trous d'aspiration (6), afin de prendre un nouveau sachet à excréments (3) et de le fixer au siège (2);

　　- la fermeture de l'obturateur (11);

　　- l'ouverture de la soupape (13) de la conduite de dépression (12), afin d'évacuer le sachet d'excréments (3);

- la mise en route du moteur (10), afin de rabattre le siège (2) et de le bloquer.

13. Système de commande de toilettes selon l'une des revendications 1 et 3 à 11, caractérisé en ce que partant d'une toilette utilisée - on a prévu au moins les éléments suivants, pour :
    - la fermeture de la soupape (9) sur la première conduite d'aspiration (8) et de la soupape (13) de la conduite de dépression (12), afin de libérer le sachet d'excréments (3) de la cuvette (101) des toilettes;
    - l'ouverture de l'obturateur (11), afin d'enlever le sachet d'excréments (3);
    - la mise en route du moteur (10), afin de rabattre le distributeur (104) sur le siège (102);
    - l'ouverture de la soupape (9) de la première conduite d'aspiration (8) des trous d'aspiration (6), afin de prendre un nouveau sachet à excréments (3) et de le fixer au siège (102);
    - la fermeture de l'obturateur (11);
    - l'ouverture de la soupape (13) de la conduite de dépression (12), afin de déplier le sachet d'excréments (3);
    - la mise en route du moteur (10) au moment où le distributeur (104) est soulevé, afin de relever le distributeur (104).

14. Système de commande de toilettes selon la revendication 12 ou 13, caractérisé en ce qu'il présente au moins les éléments suivants :
    - un élément de commande, de préférence dépendant du temps, pour fermer la soupape (13) de la conduite de dépression (12) de la cuvette (1; 101) de toilette après le déploiement du sachet à excréments (3), afin d'économiser sur l'énergie nécessaire à l'aspiration pendant l'utilisation;
    - un élément de commande associé à l'ouverture du premier obturateur (11) pour l'ouverture de la soupape (14) sur la seconde conduite d'aspiration (27), afin de faciliter l'évacuation du sachet d'excréments (3) vers la chambre refroidie (16);
    - un élément de commande associé à l'ouverture du premier obturateur (11) pour provoquer à chaque fois une rotation du tube coudé (25), de préférence de 20° - 45°, afin de mieux répartir les sachets d'excréments (3) dans la chambre refroidie (16);
    - un élément de commande associé à l'ouverture du premier obturateur (11) pour provoquer une rotation courte de la chambre refroidie (16) conçue comme un récipient collecteur, afin de mieux répartir les sachets d'excréments (3) dans la chambre refroidie (16);
    - un élément de commande pour fermer le premier obturateur (11), afin de diminuer les émissions d'odeurs et pour fournir un espace fermé sous un vide partiel dans la cuvette (1; 101) de toilette, afin de déplier le sachet à excréments (3);
    - un élément de commande, associé à la fermeture du premier obturateur (11), pour la fermeture de la soupape (14) sur la seconde conduite d'aspiration (27), afin d'économiser sur l'énergie d'aspiration nécessaire après l'enlèvement du sachet d'excréments (3);
    - un élément de commande, associé au relèvement du distributeur pivotant (104), pour l'ouverture de la soupape (9) de la première conduite d'aspiration (6), afin de fixer fermement le sachet à excréments (3) sur le siège (102);
    - un élément de commande, réalisé par exemple comme un détecteur d'utilisation ou associé à l'ouverture de la porte de toilette, pour ouvrir la soupape (9) de la première conduite d'aspiration (8), afin d'établir le vide partiel nécessaire pour tenir fermement le sachet à excréments (3) sur le siège (2);
    - un élément de commande, réalisé de préférence comme régulateur opérationel, associé au commutateur (par exemple actionné par le pied), afin d'effectuer l'enlèvement et la mise en place d'un nouveau sachet à excréments (3) après l'actionnement du commutateur;
    - un élément de commande, réalisé de préférence comme régulateur opérationel, associé au commutateur (par exemple actionné par le pied) et à un détecteur d'utilisation ou d'ouverture de la porte de toilette, afin de préparer la toilette pour son utilisation, lorsqu'un utilisateur précédent a oublié d'actionner le commutateur après utilisation;
    - un élément de commande, associé à l'utilisation du dernier sachet à excréments (3) du distributeur (104), afin d'immobiliser le distributeur (104), qui normalement peut pivoter;
    - un élément de commande, associé à l'utilisation du dernier sachet à excréments (3) du distributeur (4; 104), afin d'émettre un signal pour indiquer à l'utilisateur et au personnel de service que la toilette n'est pas utilisable;
    - un élément de commande, associé à une sonde de température, afin de commuter du système de refroidissement externe à l'installation de refroidissement interne, par exemple lors de l'utilisation

14

EP 0 396 031 B1

dans un avion;
- un élément de commande, associé à une sonde de pression, afin de commuter de la source de pression interne à la pression externe plus basse, par exemple lors de l'utilisation dans un avion.

15. Système de commande selon la revendication 14 pour des toilettes selon la revendication 7, caractérisé en ce qu'il présente au moins les éléments de commande suivants:
- un élément de commande associé à l'ouverture du premier obturateur (11), pour ouvrir la soupape (15) sur la troisième conduite d'aspiration (36) dans l'écluse (26), afin de faciliter l'évacuation du sachet d'excréments (3) dans l'écluse (26);
- un élément de commande associé à la fermeture du premier obturateur (11), pour ouvrir le second obturateur (11') et pour ouvrir en même temps la soupape (14) de la seconde conduite d'aspiration (27), afin de faciliter l'évacuation du sachet d'excréments (3) hors de l'écluse (26) et dans la chambre refroidie (16);
- un élément de commande associé à la fermeture du premier obturateur (11), pour fermer la soupape (15) de la troisième conduite d'aspiration (36) dans l'écluse (26) et pour ouvrir en même temps le second obturateur (11');
- un élément de commande associé à la fermeture de la seconde écluse (11') pour fermer la soupape (14) sur la seconde conduite d'aspiration (27), afin d'économiser sur l'énergie d'aspiration après l'évacuation du sachet d'excréments (3);

16. Sachet à excréments (3) pour des toilettes selon l'une des revendications 1 à 11, caractérisé en ce qu'une poche (31) formée comme un accordéon et repliée à plat, est solidaire d'un bord d'appui (30) correspondant au siège (2; 102).

17. Sachet à excréments (3) selon la revendication 16, caractérisé en ce qu'il est formé en spirale et de préférence en un matériau putrescible.

Fig. 1

Fig. 2

16

EP 0 396 031 B1

$\underline{\text{Fig. 3}}$

$\underline{\text{Fig. 4}}$

$\underline{\text{Fig. 6}}$

17

_Fig. 5_

Fig. 7

Fig. 8